Europäisches Patentamt

European Patent Office

Office européen des brevets

(11) Publication number: **0 125 040**
**B1**

(12) **EUROPEAN PATENT SPECIFICATION**

(45) Date of publication of patent specification: 08.07.87

(51) Int. Cl.⁴: **F 16 B 12/14**

(21) Application number: **84302449.8**

(22) Date of filing: **10.04.84**

(54) A connector for joining two members to one another.

(30) Priority: **11.04.83 NZ 203839**
**15.04.83 NZ 203906**

(43) Date of publication of application:
**14.11.84 Bulletin 84/46**

(45) Publication of the grant of the patent:
**08.07.87 Bulletin 87/28**

(84) Designated Contracting States:
**AT BE CH DE FR IT LI LU NL SE**

(56) References cited:
**DE-C- 258 072**
**DE-C- 282 145**
**DE-U-1 802 932**
**DE-U-7 010 636**
**DE-U-7 502 627**
**FR-A-1 560 471**
**US-A-1 967 039**
**US-A-2 639 179**

**Technologie der Holzbearbeitung, 1. Auflage,
S. 346, VEB Fachbuchverlag Leipzig 1982**

(73) Proprietor: **Worrallo, Anthony Charles**
**15 Sprott Road**
**Auckland 5 (NZ)**

(72) Inventor: **Worrallo, Anthony Charles**
**15 Sprott Road**
**Auckland 5 (NZ)**

(74) Representative: **Jones, Graham H.
Graham Jones & Company
77 Beaconsfield Road Blackheath
London SE3 7LG (GB)**

Courier Press, Leamington Spa, England.

## Description

This invention relates to connectors for connecting two members to one another.

It is known to connect the various members of demountable furniture together using, for example, nuts and bolts, and screws. Screws, if removed and re-inserted a number of times, do not maintain their tightness. Nuts and bolts tend to be unsightly and do not find favour with furniture designers.

It is further known from the book "Technologie der Holzbearbeitung", page 346, figure 12/27 to have a connector for joining two members to one another, the connector comprising first and second components, the first component having a cylindrical portion with a threaded blind bore therein, the blind bore opening through one end of the cylindrical portion, a formation for facilitating rotation of the component about the axis of the blind bore, and a head which is of greater diameter than the cylindrical portion and which is at the end of the cylindrical portion opposite to said one end, and the second component having an external thread.

It is an aim of the present invention to provide a connector which may be released and re-connected without any loss of efficiency and which is aesthetically acceptable.

Accordingly, this invention provides a connector for joining two members to one another, the connector comprising first and second components, the first component having a cylindrical portion with a threaded blind bore therein, the blind bore opening through one end of the cylindrical portion, a formation for facilitating rotation of the first component about the axis of the blind bore, and a head which is of greater diameter than the cylindrical portion and which is at the end of the cylindrical portion opposite to said one end, and the second component having an external thread, characterized in that the second component has first and second externally threaded sections, the first section being coaxial with the second section, the diameter of the first section being greater than the diameter of the second section and the threading of the first section being compatible with the threading of the blind bore, in that the second component includes a formation which facilitates rotation of the second component about the common axis of the first and the second sections.

The formation of the first component can be a recess for receiving a screwdriver or an Allen key, or can be flats for enabling the first component to be turned using a spanner or the like.

In one form, the second component is of composite form and consists of two parts, one part including an externally threaded sleeve and the other part being constituted by a screw, the screw having a threaded shank which passes freely through the bore of the sleeve and protrudes from one end thereof and a head which is too large to pass through the bore, the sleeve constituting the first section and the portion of the shank of the screw which protrudes from the bore constituting the second section.

In this form, the connector is preferably one in which the formation of the second component is constituted by a screw slot in the head of the screw, and in which the end of the sleeve from which the screw shank projects is formed with a protuberance for penetrating that one of the members into which the screw is inserted.

In another form, the second component is constituted by a piece of metal which is machined to form the first and the second externally threaded sections of different diameters and to form a slot in the end of the first section, which slot constitutes the formation of the second component and which slot is adapted to receive a screw driver.

Embodiments of the invention will now be described solely by way of example and with reference to the accompanying drawings in which:

Figure 1 is an axial section through one part of a second component of a first connector according to the invention;

Figure 2 is an end view of the part of Figure 1;

Figure 3 illustrates a screw forming the second part of the second component;

Figure 4 is an axial section through a first component of the connector;

Figure 5 is an end view of the first component of Figure 4;

Figure 6 illustrates an assembled connector;

Figure 7 is an elevation of a second component of a second connector according to the invention;

Figure 8 illustrates the manner in which the components of Figures 4 and 7 are used in conjunction with one another to connect two members together; and

Figures 9 illustrates a further use of the components of Figures 4 and 7.

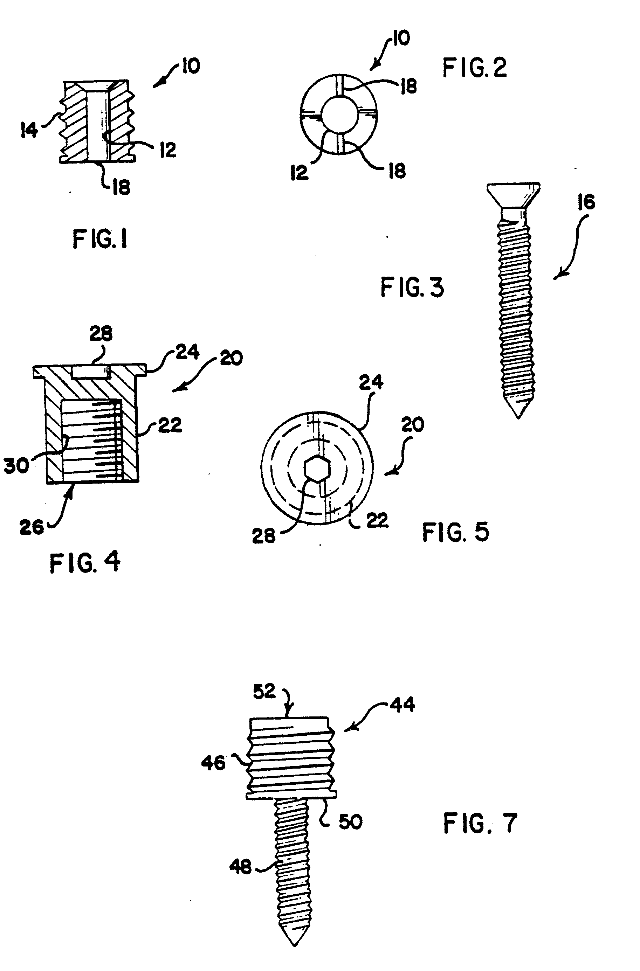

Referring now to Figures 1 to 6, the second component part illustrated in Figures 1 and 2 is designated 10 and comprises a generally cylindrical sleeve having an axial bore 12 and external threading 14. The diameter of the bore 12 is such that the threaded shank of the screw 16 illustrated in Figure 3 can pass freely through the bore 12. At the upper end as illustrated in Figure 1 the bore 12 is countersunk and at the lower end of the component part 10 there are diametrically opposed protruding ribs 18. The component part 10 can be of synthetic plastics material but is desirably of metal, and can be produced by die casting. The head of the screw 16 is too large to pass through the bore 12.

The screw 16 of Figure 3, which constitutes the second part of a composite second component, can be of any suitable type such as a wood screw, a self-tapping screw or a machine screw. The diameter of its shank is such that it can pass freely through the bore 12, the head of the screw being such that it seats in the countersink provided therefor at the upper end of the bore 12.

The first component 20 shown in Figure 4 is a generally cylindrical portion 22 with a head 24 at one end of the portion 22. An internally threaded blind bore 26 is provided in the cylindrical portion 22, the bore 26 opening through that end of the cylindrical portion 22 which is remote from the head 24. The head 24 is round in end elevation (as shown in Figure 5) and has at the centre thereof a recess 28. In the illustrated form the recess 28 is in the form of a socket which can receive an Allen key. The recess 28 could, however, be in the form of a screwdriver slot or cross. The threading 30 of the component 20 is compatible with the threading 14 of the component 10 and the head 24 is of larger diameter than the cylindrical portion 22.

In the illustrated form both the top face of the head 24 and the annular underface thereof are flat. However, the top face may be domed. The recess 28 can be omitted in which event the head is hexagonal or some other shape such as square which provides flats to enable a spanner or similar device to be used in conjunction therewith.

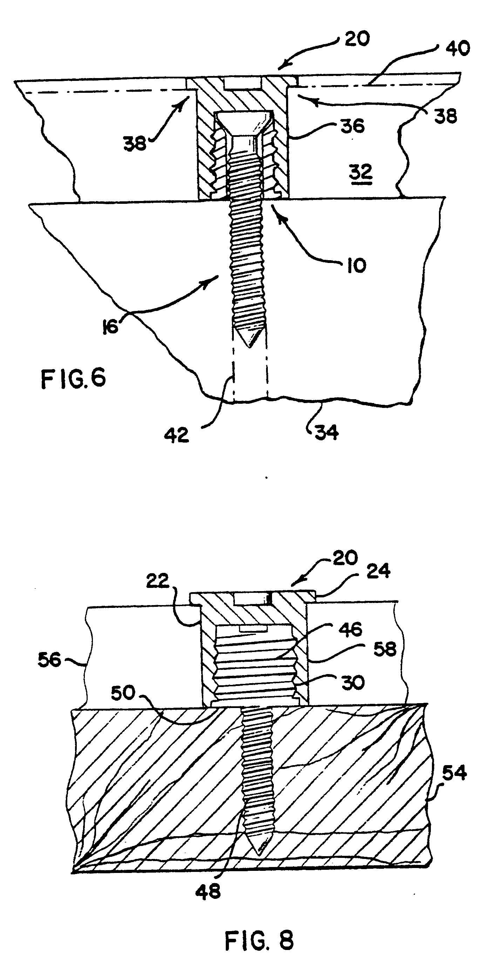

Figure 6 diagrammatically illustrates the manner in which the component part 10, component 20 and the screw 16 are used to connect two members 32 and 34 to one another. The member 32 is drilled so as to provide a through bore 36 the diameter of which is substantially the same as that of the cylindrical portion 22 of the component 20. In the illustrated form the bore 36 has been countersunk at 38 in such a manner as to result in the upper face of the component 20 being flush with the outer face of the member 32. Countersinking is not, however, essential and if desired the top face of the member 32 can lie at the level shown by the chain dotted line 40 so that the head 24 stands proud of the face of the member 32.

The component part 10 is secured to the member 34 by passing the screw 16 through the bore 12 into the member 34. The member 34 can be pre-drilled if the screw 16 is not of the self-tapping type. The screw 16 is tightened until it presses the component part 10 against the member 34. The ribs 18 penetrate in the member 34 so that the component part 10 is restrained from rotating. The part 10 and screw 16 now form a composite component of the connector.

The member 32 is then positioned so that the component part 10 lies in the bore 36. As will clearly be seen from Figure 6, the component part 10 is a very loose fit in the bore 36.

The component 20 is inserted into the bore 36 and turned so that its threading 30 picks-up the threading 14 of the component part 10. Using a spanner, screwdriver or Allen key (depending on the nature of the head 24) the component 20 is tightened until the underface of the head 24 thereof engages the member 32. The head 24 presses the members 32 against the member 34 to provide a secure joint.

The connector described can also be used for the purpose of securing a member such as the member 32 to an aluminium extrusion which has a screw groove. Conventionally, a screw groove in an aluminium section·is part-circular in cross- section and extends through, say, 270'. In Figure 6 the position that would be occupied by such a screw receiving groove is shown at 42. In this form it is necessary for the screw 16 to be of the self-tapping type.

The ribs 18 can if desired by replaced by spikes or serrations which will penetrate the face of the member 34 and prevent rotation of the component 10. Alternatively, the ribs or serrations can be omitted and a locking washer (not shown) can be provided between the member 34 and the component 10.

Figure 7 illustrates a component which, in conjunction with the component of Figure 4, forms a further embodiment of the present invention.

The component of Figure 7 is designated 44 and consists of two threaded sections 46 and 48. The section 46 is of greater diameter than the section 48 and there is an annular shoulder 50 between the sections. The component is formed with a socket, screw groove or screw cross designated 52 and it will be noted that the component is devoid of any head which is of greater diameter than the section 46.

The threading of the section 46 is compatible with the threading 30 of the component 20 and the threading of the section 48 is either a wood screw thread or a self-tapping thread.

Figure 8 illustrates the mode of use of the components 20 and 44. The section 48 of the component 44 is screwed into a member 54, the member 54 being shown as a piece of timber. It will be understood that it could, however, be an aluminium section with a screw groove therein. The component 44 is screwed in until the shoulder 50 engages the top face of the member 54. The member which is to be attached to the member 54 is designated 56 and this has a bore 58 therein the diameter of which is compatible with that of the outside diameter of the cylindrical portion 22. The member 56 is positioned so that the section 46 of the component 44 lies in the bore 58.

The component 20 is then inserted into the bore 58 and rotated so that its threading 30 picks-up the compatible threading of the section 46. Turning of the component 20 causes it to move into the bore 58 until the underface of the head 24 engages the free face of the member 56.

It will be understood that the component 20 can be attached to, and released from, the component 44 any number of times to form a readily demountable connecting system.

The connectors described can also be used for the purpose of mounting glass or other material which is insufficiently strong or not capable of receiving a tapped screw.

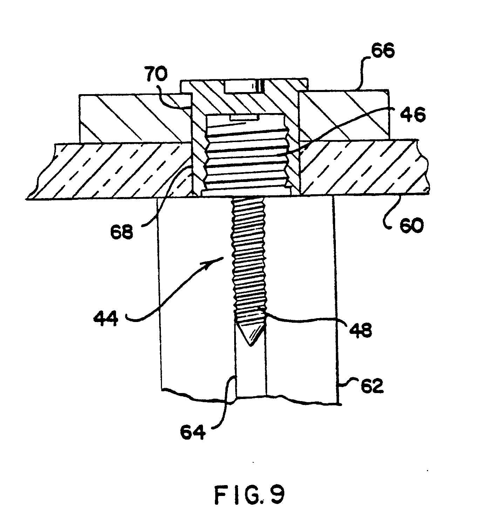

In Figure 9 reference numeral 60 designates a glass sheet, reference numeral 62 an extrusion having a screw groove 64 and reference numeral 66 a strip which can be of metal or synthetic plastics material. The sheet 60 and the strip 66 have bores 68 and 70 therein of the same size, these bores being compatible with the portion 22.

The component 44 is secured to the extrusion 62 by screwing the self-tapping thread of the section 48 into the screw groove 64. The relatively fragile glass or plastics sheet 60 is then placed so that its bore 68 receives the section 46 and the strip 66 is placed so that its bore 70 registers with the bore 80. Finally, the component 20 is inserted into the registering bores 68, 70, and tightened down so as to grip the sheet 60 between the strip 66 and the extrusion 62. The strip 66 can be countersunk if required to accommodate the head 24.

## Claims

1. A connector for joining two members (32, 34) to one another, the connector comprising first and second components (20, 44), the first component (20) having a cylindrical portion (22) with a threaded blind bore (26) therein, the blind bore (26) opening through one end of the cylindrical portion (22), a formation (28) for facilitating rotation of the first component (20) about the axis of the blind bore (26), and a head (24) which is of greater diameter than the cylindrical portion (22) and which is at the end of the cylindrical portion (22) opposite to said one end, and the second component (44) having an external thread, characterised in that the second component (44) has first and second externally threaded sections, the first section (46) being coaxial with the second section (48), the diameter of the first section (46) being greater than the diameter of the second section (48) and the threading of the first section (46) being compatible with the threading of the blind bore (26), in that the second component (44) includes a formation (52) which facilitates rotation of the second component (44) about the common axis of the first and second sections (46, 48).

2. A connector according to claim 1 characterised in that the formation (28) of the first component (20) is a recess for receiving a screwdriver or an Allen key.

3. A connector according to claim 1 characterised in that the formation of the first component (20) are flats for enabling the first component to be turned using a spanner or the like.

4. A connector according to any one of the preceding claims characterised in that the second component is of composite form and consists of two parts (10, 16), one part including an externally threaded sleeve (10) and the other part being constituted by a screw (16), the screw (16) having a threaded shank which passes freely through the bore (12) of the sleeve (10) and protrudes from one end thereof and a head which is too large to pass through the bore (12), the sleeve (10) constituting the first section and the portion of the shank of the screw (16) which protrudes from the bore (12) constituting the second section.

5. A connector according to claim 4 characterised in that the formation of the second component is constituted by a screw slot in the head of the screw (16), and in that the end of the sleeve (10) from which the screw shank projects is formed with a protuberance (18) for permitting that one (34) of the members into which the screw is inserted.

6. A connector according to any one of claims 1 to 3 characterised in that the second component (44) is constituted by a piece of metal which is machined to form the first and the second externally threaded sections (46, 48) of different diameters and to form a slot in the end of the first section (46), which slot constitutes the formation (52) of the second component (44) and which slot is adapted to receive a screwdriver.

## Patentansprüche

1. Verbindungsvorrichtung zum Verbinden von zwei Teilen (32, 34), mit ersten und zweiten Komponenten (20, 44), wobei die erste Komponente (20) einen zylindrischen Abschnitt (22) mit einer Gewindesackbohrung (26) aufweist, die durch ein Ende des zylindrischen Abschnitts (22) hindurch offen ist, einer Struktur (28) zum Erleichtern des Drehens der ersten Komponente (20) um die Achse der Sackbohrung (26) und einem Kopf (24), der einen größeren Durchmesser als der zylindrische Abschnitt (22) hat und der sich an dem dem einen Ende gegenüberliegenden Ende des zylindrischen Abschnitts (22) befindet, wobei die zweite Komponente (44) mit einem Außengewinde versehen ist, dadurch gekennzeichnet, daß die zweite Komponente (44) erste und zweite äußere Gewindebereiche aufweist, wobei der erste Gewindebereich (46) koaxial zum zweiten Gewindebereich (48) verläuft und der Durchmesser des ersten Gewindebereichs (46) größer als der Durchmesser des zweiten Gewindebereichs (48) ist, während das Gewinde des ersten Bereichs (46) mit dem Gewinde der Sackbohrung (26) zusammenpaßt, und daß die zweite Komponente (44) eine Struktur (52) aufweist, die das Drehen der zweiten Komponente (44) um die gemeinsame Achse der ersten und zweiten Gewindebereiche (46, 48) erleichtert.

2. Verbindungsvorrichtung nach Anspruch 1, dadurch gekennzeichnet, daß die Struktur (28) der ersten Komponente (20) eine Ausnehmung zur Aufnahme eines Schraubenziehers oder eines Inbusschlüssels ist.

3. Verbindungsvorrichtung nach Anspruch 1, dadurch gekennzeichnet, daß die Struktur der ersten Komponente (20) Abflachungen sind, die ermöglichen, daß die erste Komponente unter Verwendung eines Schraubenschlüssels oder dergleichen gedreht werden.

4. Verbindungsvorrichtung nach einem der vorhergehenden Ansprüche, dadurch gekennzeichnet, daß die zweite Komponente in zusammengesetzter Form ausgebildet ist und aus zwei Teilen (10, 16) besteht, von denen der eine eine Büchse (10) mit Außengewinde enthält und der andere von einer Schraube (16) gebildet ist, wobei die Schraube (16) einen Gewindeschaft aufweist, der frei durch die Bohrung (12) der Büchse (10) ragt und an deren einem Ende vorsteht, und außerdem einen kopf aufweist, der zu groß ist, um durch die Bohrung (12) hindurchzupassen, und wobei die Büchse (10) an den ersten Gewindebereich bildet, während der aus der Bohrung (12) hervorstehende Abschnitt des Schafts der Schraube (16) den zweiten Gewindebereich bildet.

5. Verbindungsvorrichtung nach Anspruch 4, dadurch gekennzeichnet, daß die Struktur der zweiten Komponente von einem Schraubenschlitz im Kopf der Schraube (16) gebildet ist und daß das Ende des Büchse (10), aus dem der Schraubenschaft herausragt, mit einem Vorsprung (18) versehen ist, der in den einen (34) der Teile eindringt, in den die Schraube eingefügt wird.

6. Verbindungsvorrichtung nach einem der Ansprüche 1 bis 3, dadurch gekennzeichnet, daß die zweite Komponente (44) von einem Metallstück gebildet ist, das maschinell so bearbeitet ist, daß die ersten und zweiten Außengewindebereiche (46, 48) mit unterschiedlichen Durchmessern entstehen und daß ein Schlitz in einem Ende des ersten Gewindebereichs (46) gebildet wird, der die Struktur (52) der zweiten Komponente (44) bildet und zur Aufnahme eines Schraubenziehers geeignet ist.

**Revendications**

1. Connecteur pour assembler deux organes (32, 34), ce connecteur comprenant des premier et second éléments (20, 44), le premier élément (20) comportant une partie cylindrique (22) pourvue d'un trou en cul-de-sac taraudé (26), le trou en cul-de-sac (26) s'ouvrant par un extrémité de la partie cylindrique (22), une formation (28) pour faciliter la rotation du premier élément (20) autour de l'axe du trou en cul-de-sac (26) et une tête (24) qui est d'un diamètre supérieur à celui de la partie cylindrique (22) et est à l'extrémité de la partie cylindrique (22) opposée à l'extrémité précitée, le second élément (44) comportant une tête extérieur, caractérisé en ce que le second élément (44) comporte des première et seconde sections extérieurement filetées, la première section (46) étant coaxiale à la seconde section (48), le diamètre de la première section (46) étant plus grand que le diamètre de la second section (48) et le filetage de la première section (46) étant compatible avec le taraudage du trou en cul-de-sac (26), en ce que le second élément (44) comprend une formation (52) qui facilite la rotation du second élément (44) autour de l'axe commun des première et seconde sections (46, 48).

2. Connecteur suivant la revendication 1, caractérisé en ce que la formation (28) du premier élément (20) est un creux pour recevoir un tournevis ou une clef d'Allen.

3. Connecteur suivant la revendication 1, caractérisé en ce que la formation du premier élément (20) est constituée par des plats pour permettre de faire tourner le premier élément en utilisant une clef de serrage ou analogue.

4. Connecteur suivant l'une quelconque des revendications précédentes, caractérisé en ce que le second élément est de forme composite et se compose de deux parties (10, 16), une partie comportant un manchon fileté extérieurement (10) et l'autre partie étant constituée d'une vis (16), la vis (16) comportant une tige filetée qui passe librement par le trou (12) du manchon (10) et qui fait saillie par une de ses extrémités ainsi qu'une tête qui est trop large pour passer par le trou (12), le manchon (10) constituant la première section et la partie de la tige de la bis (16) qui sort du trou (12) constituant la seconde section.

5. Connecteur suivant la revendication 4, caractérisé en ce que la formation du second élément est constituée par une encoche de vis dans la tête de la vis (16) et en ce que l'extrémité du manchon (10) d'où sort la tige de vis comprend une protubérance (18) pour pénétrer l'élément (34) dans lequel la vis est introduite.

6. Connecteur suivant l'une quelconque des revendications 1 à 3, caractérisé en ce que le second élément (44) est constitué par une pièce de métal qui est usinée pour former les première et seconde sections extérieurement filetées (46, 48) de différents diamètres et pour former une encoche dans l'extrémité de la première section (46), laquelle encoche constitue la formation (52) du second élément (44) et est adaptée pour recevoir un tournevis.

0 125 040

14 — 10 — 12 — 18

FIG.1

10 — 18 — 12 — 18

FIG.2

16

FIG.3

28 — 24 — 20 — 22 — 30 — 26

FIG.4

24 — 20 — 22 — 28

FIG.5

52 — 44 — 46 — 50 — 48

FIG.7

1

FIG. 6

FIG. 8

FIG. 9